# EUROPEAN PATENT APPLICATION

(11) **EP 1 947 564 A2**
(43) Date of publication of application: **23.07.2008**
(21) Application number: 08150268.4
(22) Date of filing: 15.01.2008
(51) Int. Cl.: G06F 3/12

(54) **Method of decomposing print jobs**

(30) Priority: 16.01.2007 US 654166
(71) Applicant: Xerox Corporation, Rochester, New York 14644 (US)
(72) Inventor: Ray, Elton T., Lakeville, NY 14480 (US)
(74) Representative: Grünecker, Kinkeldey, Stockmair & Schwanhäusser Anwaltssozietät

(57) **Abstract**

A method of automatically printing a large document in which the document image file is decomposed into manageably sized segments that are sequentialized and serially streamed from a remote location on a network to a print server for printing. In one exemplary embodiment the segments are sequentially printed on a single printer and automatically assembled to a completed document. In another exemplary embodiment the segments are printed concurrently on more than one printer and the completed document is assembled by the user/operator.

## Description

### BACKGROUND

The present disclosure relates to automatic printing and particularly to print jobs where the document includes a large number of pages, for example, documents with more than 100 pages. A sufficiently large image file can tax the operating system and may result in a network transmission timeout due to the long submission time, thereby resulting in termination of the printing job. Where such print jobs of large documents exceed the limitations of the application software programming languages, the user or operator is faced with the necessity of breaking up the document into different printing jobs which requires additional time for printing and subsequent assembly of the print jobs to obtain the completed document.

Presently, a large document print job is sent to a printer over a network using print construct software in an arrangement where the print construct software streams the job to the print server. Upon receipt of the printing job, the server processes the data and prints the pages. Where the print job comprises a very large document image file, the printer itself may be unable to process the job due to the size of the file, or the protocol employed between the print construct software and the server is unable to support the large file size, or a print construct software itself is unable to process the large document image file.

Thus, it has been desired to provide for automatically printing large document files in existing printing equipment without requiring significant modifications to existing printing implementations.

### BRIEF DESCRIPTION

The present disclosure describes a method or process of automatically printing very large document image files with existing printing setups in a manner which employs decomposing the document image file into a plurality of manageably sized segments which may then be streamed over a network to the print server and printer. The method of the present invention thus permits very large documents to be printed without requiring modifications to an existing print server which would otherwise be unable to process the document. In the exemplary embodiment described and illustrated in the present disclosure, the decomposed segments are sequentialized such that the segments can be serially printed on a single printer, and, the document is subsequently automatically assembled without the user or operator being aware of the arrangement. Alternatively, the segments may be concurrently printed on individual printers and the segments separately assembled by the user or operator.
In one embodiment of the method defined in claim 8, the steps of printing and assembling include printing the segments sequentially on a single printer.
In a further embodiment the steps of printing and assembling include printing the segments concurrently on a plurality of printers.
In a further embodiment the steps of printing and assembling include raster image processing.
In a further embodiment the step of decomposing includes creating segments in the same document format as the original document.
In a further embodiment the step of decomposing includes creating segments in the same print document language as the original document.

An advantage of the present method or process is that it does not require a file transfer protocol gateway; and, the print server software does not require modification, the modifications being made in the print construct software.

### BRIEF DESCRIPTION OF THE DRAWINGS

FIGURE 1 is a pictorial representation of the process described in the present disclosure; and

FIGURE 2 is a block diagram of the process disclosed.

### DETAILED DESCRIPTION

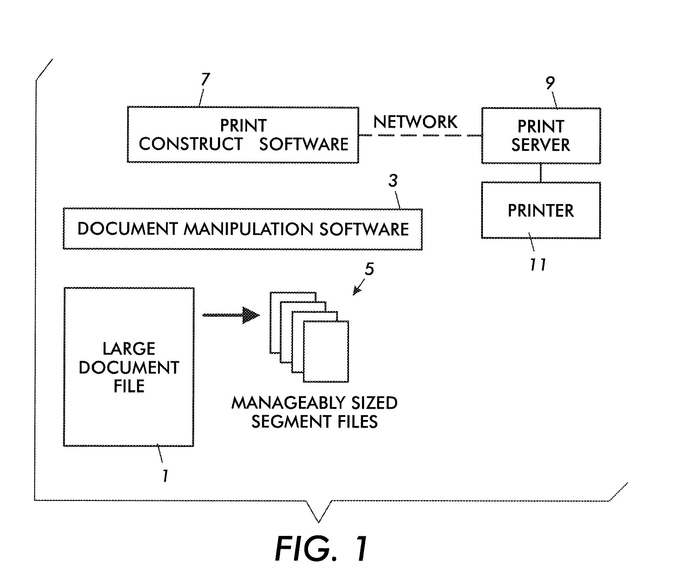

Referring to FIGURE 1, the arrangement of the method of the present disclosure is shown wherein the large document file 1 is decomposed by document manipulation software 3 to a plurality of manageably sized segment files indicated generally at 5 and formatted in print construct software 7. The software 7 converts the segment images into a format that the print server 9 understands; and, the print server 9 directs the operation of the printer 11. In the present practice, a print construct software 7 employs a commercially available software package which reads and writes the documents in a printer document language such, as for example, PostScript® which is a registered trademark of Adobe Systems Corporation.

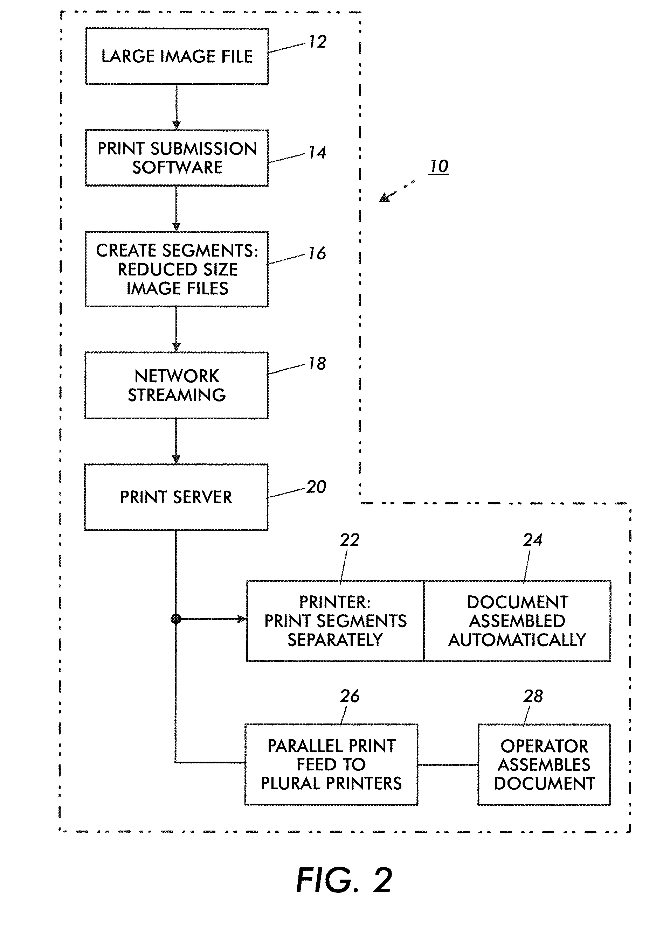

Referring to FIGURE 2, the operation of the system is indicated generally at 10 and begins with the large image file 12 of the document to be printed, which the system inputs to the print submission software 14, which is operative to create a plurality of manageably sized document segments of reduced size at step 16. Software at step 14 and 16 is located remotely from the print server indicated at 20. The software at step 16 is operative to output the segments in a print document language which may be read by a print server. In the present practice, the software employed may be either a commercially available package such as PostScript® or a raster document object software available from the Xerox Corporation.

The individually created document segments are sequentialized such as, for example by raster image processing and are then serially streamed at step 18 to the print server 20.

The print server function indicated at 20 may be configured to sequentially print the document segments separately as indicated at 22, whereupon the complete document is assembled automatically at step 24 without any indication that the printing was done by segments. If the document is to be bound, the segments will be bound as one document.

Alternatively, the print server may output each segment to an individual printer, as indicated at step 26, whereupon concurrent printing of the segments may be accomplished. In this event, the complete document must be assembled manually by the operator, as indicated at step 28. This latter arrangement of concurrent printing and separate printers may be desirable where the print job is very large and the presence of a single large document in the print tray of a single printer would prove to be unwieldy.

## Claims

1. A method of automatically controlling document printing comprising:
(a) decomposing a document printing job into a plurality of segments;
(b) inputting the segments sequentially to a controller and sequentializing the segments;
(c) processing the segments in the controller and printing the segments; and,
(d) assembling the printed segments into the completed document job.

2. The method described in claim 1, wherein the steps of sequentializing the segments includes scanning and raster image processing.

3. The method described in claim 1, wherein the step of decomposing includes the step of decomposing the job into smaller files of the same document format as the original job documents.

4. The method defined in claim 1, wherein the step of printing the segments includes printing the segments sequentially.

5. The method defined in claim 1, wherein the step of printing the segments includes printing the segments concurrently.

6. The method defined in claim 1, wherein the step of decomposing includes decomposing at a location, remote from the controller and streaming the segments over a network to the controller.

7. The method defined in claim 1, wherein the step of decomposing includes creating segments in the same print document language (PDL) as the original document.

8. A method of automatically controlling document printing comprising:
(a) decomposing a document printing job into a plurality of segments;
(b) sequentializing the segment and streaming the segments to a print server; and,
(c) printing the segments and assembling the document.

9. The method defined in claim 8, wherein the step of sequentializing the segments includes scanning and raster image processing.

10. The method defined in claim 8, wherein the step of decomposing includes decomposing at a location remote from the print server and streaming the segments over a network to the print server.
